(19) Europäisches Patentamt
European Patent Office
Office européen des brevets

(11) **EP 1 544 589 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
*G01M 9/06* <sup>(2006.01)</sup>     *G01M 17/007* <sup>(2006.01)</sup>
*G01L 5/16* <sup>(2006.01)</sup>

(21) Anmeldenummer: **04030007.1**

(22) Anmeldetag: **17.12.2004**

(54) **Verfahren und Vorrichtung zur Bestimmung von auf ein Kraftfahrzeug in einem Windkanal unter Windanströmung einwirkenden Vertikalkräften**

Method and apparatus for determining vertical forces acting on a vehicle at wind flow in a wind tunnel

Méthode et dispositif pour la détermination des forces verticales actuées sur un véhicule par le courant d'air dans une soufflerie

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10361314**

(43) Veröffentlichungstag der Anmeldung:
**22.06.2005 Patentblatt 2005/25**

(73) Patentinhaber: **FORSCHUNGSINSTITUT FÜR KRAFTFAHRWESEN UND FAHRZEUGMOTOREN STUTTGART**
**D-70569 Stuttgart (DE)**

(72) Erfinder:
• **Widdecke, Nils, Dipl.-Ing.**
**71088 Holzgerlingen (DE)**

• **Potthoff, Jürgen, Dipl.-Ing.**
**71034 Böblingen (DE)**

(74) Vertreter: **Hoeger, Stellrecht & Partner Patentanwälte**
**Uhlandstrasse 14c**
**70182 Stuttgart (DE)**

(56) Entgegenhaltungen:
| | |
|---|---|
| EP-A- 0 168 527 | EP-A- 0 504 437 |
| DE-A1- 3 941 685 | DE-A1- 19 527 742 |
| DE-A1- 19 702 421 | DE-C1- 3 715 460 |
| DE-U1- 8 803 252 | US-A- 4 843 873 |

**Beschreibung**

Die Erfindung betrifft ein Verfahren zum Bestimmen eines Korrekturwertes $F_{vert,korr}$ zum Korrigieren eines mit einer Windkanalwaage gemessenen Vertikalkraftmesswertes $F_{vert,ges}$ einer insgesamt auf ein mindestens ein Rad umfassendes Fahrzeug in einem Windkanal wirkenden Vertikalkraft $F_{vert}$ unter Windanströmung, wobei der Korrekturwert $F_{vert,korr}$ einer Vertikalkraft entspricht, welche unter Windanströmung auf einen von dem mindestens einen Rad unbedeckten Stellflächenbereich einer Wagenstellfläche der Windkanalwaage wirkt.

Die Erfindung betrifft ferner eine Vorrichtung zum Durchführen eines solchen Verfahrens, umfassend einen Windkanal, eine Windkanalwaage und mindestens eine mit der Windkanalwaage verbundene, zum Stützen mindestens eines Rades eines Kraftfahrzeuges vorgesehene Waagenstellfläche.

In einem Windkanal lassen sich nicht nur Fluidströmungen um ein Fahrzeug herum bestimmen und sichtbar machen, sondern auch auf das Fahrzeug einwirkende Vertikalkräfte messen. Zur Messung der Vertikalkräfte wird prinzipiell folgendermaßen vorgegangen: Das Fahrzeug wird mit seinen Reifen im Windkanal üblicherweise auf bündig in einem Boden des Windkanals eingepassten Stellflächen, den sogenannten Platinen abgestellt. Diese Platinen sind mit einem hochpräzisen Unterflurwägesystem verbunden, der sogenannten Windkanalwaage. Die Windkanalwaage umfasst für jeden Reifen bzw. jedes Rad des Fahrzeuges eine Stellfläche der oben beschriebenen Art. Mit der Windkanalwaage lassen sich dann Wechselwirkungskräfte messen, welche über eine Radaufstandsfläche des Rades zwischen dem Fahrzeug und einer Fahrbahn wirken. Diese Wechselwirkungskräfte werden über die Platinen aufgenommen und in die Windkanalwaage eingeleitet.

Es ist bekannt, die Auftriebs- bzw. die auf ein Fahrzeug in Folge einer Windkanalströmung auf das Fahrzeug wirkende Abtriebskraft zu bestimmen, indem man von einer mit der Windkanalwaage ermittelten Vertikalkraft unter Windanströmung die Fahrzeugeigengewichtskraft, die sogenannte Tarakraft, subtrahiert.

Bei konventionellen Windkanälen bestehen die dort eingesetzten Platinen aus kleinen steifen Platten, die mehr oder weniger genau an die Radaufstandsflächen angepasst werden können. In modernen Windkanälen werden jedoch an Stelle dieser steifen Platten Laufbandeinheiten eingesetzt, welche auch als "Platinen" bezeichnet werden. Mit den Laufbandeinheiten werden die Räder des Kraftfahrzeuges angetrieben, weshalb sie auch als Raddreheinheiten bezeichnet werden. Zweck der Raddreheinheiten ist es unter anderem, eine möglichst realistische Darstellung der Fahrbahnoberfläche in der Umgebung der Reifen zu erzielen. Deshalb werden die Laufbandoberflächen der Raddreheinheiten, also die Stellflächen, im Allgemeinen wesentlich größer ausgelegt, als es zur Aufnahme der Radaufstandsflächen erforderlich wäre. Es gibt jedoch auch Windkanäle, bei denen nur ein einziges breites Laufband zum gleichzeitigen Antreiben aller Räder des Fahrzeugs vorgesehen ist. Waagenstellflächen für die Räder des Fahrzeugs sind dann jeweils unter dem Laufband angeordnet.

Bei Raddreheinheiten, deren Stellflächen größer sind als die Radaufstandsflächen, ist es jedoch nachteilig, dass über die Platinen nicht nur die reinen Radaufstandskräfte erfasst, sondern auch noch zusätzlich diejenigen Strömungskräfte gemessen werden, welche auf die nicht abgedeckten Stellflächenbereiche der Raddreheinheiten einwirken können. Unerwünschte Folge davon ist, dass auf die unbedeckten Stellflächen der Platinen zusätzliche unbekannte Kraftkomponenten einwirken, welche bei der Messung des Vertikalkraftwertes $F_{vert,ges}$ mitbestimmt werden. Diese Komponenten sind nicht linear mit den eigentlich zu messenden Auftriebs- bzw. Abtriebskräften verknüpft, weshalb sie die exakte Bestimmung der nur auf das Kraftfahrzeug wirkenden Vertikalkraft $F_{vert}$ erschweren.

Ein Ansatz zur Lösung dieses Problems wurde am Forschungsinstitut für Kraftfahrwesen und Fahrzeugmotoren Stuttgart im Rahmen einer Diplomarbeit entwickelt (Francesca Cogotti: "Aerodynamic Interference of Balance Pads in Automotive Wind Tunnels." Politecnico di Torino, Facoltà di Ingegneria, May 2002). Es handelt sich dabei um ein sehr aufwändiges, semi-empirisches Verfahren, bei welchem eine Druckverteilung auf der unbedeckten Stellfläche der Platine gemessen und aus der Druckverteilung eine resultierende Strömungskraft berechnet wird. Äußerst schwierig dabei ist, dass die Druckverteilung, mit welcher die Strömung auf die mit Geschwindigkeiten bis zu 280 km/h bewegte, unbedeckte Platinenoberfläche einwirkt, nicht bekannt ist. Diese Druckverteilung kann auch durch sehr komplizierte messtechnische oder numerische Verfahren nicht mit hinreichender Genauigkeit ermittelt werden. Zwar liefert dieses Verfahren für Fahrzeuge, welche sich in bestimmte Klassen einordnen lassen, relativ genaue Korrekturwerte, aufgrund der Kompliziertheit ist dieses Verfahren für den Einsatz im alltäglichen Windkanalbetrieb, und insbesondere zur Messung an ständig wechselnden Fahrzeuggeometrien, nicht besonders geeignet.

Aus der US 4,843,873 sind ein Verfahren und eine Vorrichtung zum Bestimmen von Momenten, die auf einen Gegenstand bei einer Messung, insbesondere in einem Windkanal, unter Anströmung wirken, bekannt. Die DE 195 27 742 A1 offenbart ein Verfahren und eine Windkanalwaage bei aerodynamischen Messungen an Fahrzeugen. Ein Versuchsstand zur Ermittlung von auf ein Kraftfahrzeug oder dessen Komponenten einwirkenden Kräften und Momenten ist in der DE 197 02 421 A1 beschrieben. Ferner sind ein Verfahren und eine Vorrichtung zur Bestimmung von Momenten bei aerodynamischen Messungen an Fahrzeugen auf Windkanalwaagen aus der EP 0 168 527 A2 bekannt. In der DE 88 03 252 U1 ist eine Windkanalwaage, insbesondere zur Messung von Kräften und Momenten an wirklichen Kraftfahrzeugen, mit einzelnen Radplatinen zur Aufnahme der Kraftfahrzeugräder bekannt, wobei wenigstens zwei Radplatinen längs und/oder querverschiebbare Lagerungen aufweisen. Und schließlich sind eine Windkanalwaage sowie ein Verfahren zu deren Betrieb aus der DE 37 15 460 C1 bekannt.

Es ist daher Aufgabe der vorliegenden Erfindung, ein Verfahren und eine Vorrichtung der eingangs beschriebenen Art so zu verbessern, dass der Korrekturwert $F_{vert,korr}$ auf einfache Weise bestimmt werden kann.

Zur Lösung dieser Aufgabe wird bei einem Verfahren der eingangs beschriebenen Art vorgeschlagen, dass ein erster Referenzwert $F_{vert,ref1}$ und ein zweiter Referenzwert $F_{vert,wind,ref2}$ gemessen werden, wobei während der Messung des ersten Referenzwertes $F_{vert,ref1}$ und des zweiten Referenzwertes $F_{vert,wind,ref2}$ das Fahrzeug mit einer Befestigungsvorrichtung am Windkanal fixiert wird, wobei der erste Referenzwert $F_{vert,ref1}$ ohne Windanströmung des Fahrzeuges gemessen wird, wobei der zweite Referenzwert $F_{vert,wind,ref2}$ unter Windanströmung des Kraftfahrzeuges gemessen wird, und wobei der Korrekturwert $F_{vert,korr}$ durch Differenzbildung zwischen dem zweiten Referenzwert $F_{vert,wind,ref2}$ und dem ersten Referenzwert $F_{vert,ref1}$ bestimmt wird.

Das vorgeschlagene erfindungsgemäße Verfahren gestattet es, den Korrekturwert $F_{vert,korr}$ ohne zusätzliche Informationen über den unbedeckten Stellflächenbereich und die Abhängigkeit der Bodendruckverteilung von der Fahrzeuggeometrie zu ermitteln. Mit dem Verfahren wird so ein direkter Zugang zur Bestimmung des Korrekturwertes $F_{vert,korr}$ eröffnet, nämlich indem der Korrekturwert $F_{vert,korr}$ durch einfache Differenzbildung zwischen dem zweiten Referenzwert $F_{vert,wind,ref2}$ und dem ersten Referenzwert $F_{vert,ref1}$ bestimmt wird. Voraussetzung ist lediglich, dass das Fahrzeug am Windkanal fixiert wird und die eigentliche Fahrzeugauftriebskraft $F_A$ nicht auf die Windkanalwaage wirkt, sondern vom Windkanal, beispielsweise dem Windkanalboden oder der Decke, aufgenommen wird.

Vorteilhaft ist es, wenn während der Messung des ersten Referenzwertes $F_{vert,ref1}$ und des zweiten Referenzwertes $F_{vert,wind,ref2}$ eine Radaufhängung des mindestens einen Rades relativ zur Karosserie oder einem Rahmen des Fahrzeuges unbeweglich festgelegt ist. Ohne Festlegung der Radaufhängung relativ zur Karosserie können zusätzlich Auftriebskräfte der Reifen mit in die Messung eingehen, welche auch unbekannt sind und insgesamt die Vertikalkraft $F_{vert}$ verfälschen. Diese Auftriebskräfte können ausgeschaltet werden durch Verriegelung der Radaufhängung des mindestens einen Rades relativ zur Karosserie. Dadurch wird insgesamt durch das Fahrzeug im Wesentlichen ein starrer Körper ausgebildet, welcher in sich inelastisch ist.

Vorteilhafterweise wird zum unbeweglichen Festlegen der Radaufhängung des mindestens einen Rades relativ zur Karosserie des Fahrzeuges mindestens eine Verriegelungsvorrichtung verwendet. Dadurch lässt sich mit wenigen Handgriffen die Radaufhängung relativ zur Karosserie festlegen.

Günstigerweise wird als Fahrzeug ein Kraftfahrzeug verwendet, beispielsweise ein Automobil oder ein Motorrad.

Gemäß einer bevorzugten Variante des Verfahrens kann vorgesehen sein, dass während der Messung des ersten Referenzwertes $F_{vert,ref1}$ und des zweiten Referenzwertes $F_{vert,wind,ref2}$ das Fahrzeug mit der Befestigungsvorrichtung am Windkanal so fixiert wird, dass mindestens ein Bruchteil einer Gewichtskraft $F_G$ des Fahrzeugs auf die Waagenstellfläche wirkt. Dadurch ist sichergestellt, dass das mindestens eine Rad des Fahrzeugs nicht unterströmt wird, was zu falschen Messergebnissen führen könnte.

Damit eine Unterströmung des mindestens einen Rades sicher vermieden werden kann, ist es günstig, wenn mindestens 75 % der Gewichtskraft $F_G$ des Fahrzeugs auf die Waagenstellfläche wirken.

Grundsätzlich können alle Messungen durchgeführt werden, ohne das mindestens eine Rad mit der Raddreheinheit anzutreiben. Günstig ist es jedoch, während der Messung des ersten Referenzwertes $F_{vert,ref1}$ und des zweiten Referenzwertes $F_{vert,wind,ref2}$ das mindestens eine Rad anzutreiben. Dadurch kann in äußerst realistischer Weise ein Korrekturwert $F_{vert, korr}$ ermittelt werden, um auch mit drehenden Rädern die bei einem im Windkanal relativ zu diesem unbewegten Fahrzeug wirkenden Vertikalkräfte aufgrund einer Windanströmung auf das Fahrzeug zu ermitteln.

Vorzugsweise wird zum Antreiben des mindestens einen Rades mindestens eine Raddreheinheit verwendet. Diese kann beispielsweise in Form eines Laufbandes ausgeführt sein oder direkt an das mindestens eine Rad über die Raddrehachse seitlich angreifen, um es anzutreiben.

Vorteilhaft kann es sein, wenn für alle Räder des Fahrzeugs eine gemeinsame Raddreheinheit verwendet wird. Mit einer solchen Raddreheinheit können alle Räder gleichzeitig angetrieben werden.

Besonders einfach durchführen lässt sich das Verfahren, wenn eine Raddreheinheit verwendet wird, welche ein Antriebsband umfasst, welches eine mit der Windströmung beaufschlagbare Länge aufweist, die mindestens einem Radstand des Fahrzeugs entspricht, und welches eine mit der Windströmung beaufschlagte Breite aufweist, die mindestens einer Breite des Fahrzeugs entspricht, wenn die Waagenstellfläche durch die von der Windströmung beaufschlagbare, durch die Länge und Breite des Antriebsbandes definierte Bandfläche gebildet wird und wenn für jedes der Räder eine mit der Windkanalwaage verbundene Stützfläche unter dem Antriebsband angeordnet ist. Mit einer solchen Raddreheinheit kann gleichzeitig auch ein sich unter dem Fahrzeug bewegender Boden, also eine sich relativ zum Fahrzeug bewegende Fahrbahn, simuliert werden. Auf das Fahrzeug wirkende Vertikalkräfte werden dann durch das Antriebsband hindurch in die Stützflächen eingeleitet.

Bei Fahrzeugen, welche mehr als ein Rad aufweisen, kann es vorteilhaft sein, wenn für jedes der Räder eine eigene, ein Antriebsband und eine Waagenstellfläche umfassende Raddreheinheit vorgesehen ist. Beispielsweise kann zusätzlich ein sich bewegender Boden zwischen den Rädern angeordnet sein, der wahlweise relativ zum Fahrzeug bewegt wird oder stillsteht. Mit individuell zugeordneten Raddreheinheiten können damit gegenüber einem einzigen Laufband weitere bzw. andere Versuchsbedingungen eingestellt werden.

Ferner kann es vorteilhaft sein, wenn während der Messung des Vertikalkraftmesswertes $F_{vert,ges}$ das mindestens eine Rad angetrieben wird. Insbesondere ist es vorteilhaft, wenn auch bei der Messung der beiden Referenzwerte das mindestens eine Rad angetrieben wird.

Um alle Messungen unter gleichen Bedingungen durchzuführen, kann es ferner von Vorteil sein, wenn während der Messung eines Gesamtvertikalkraftmesswertes $F_{vert,brutto}$ aller auf die Windkanalwaage wirkenden Vertikalkräfte das mindestens eine Rad angetrieben wird.

Um besonders wirklichkeitsnahe Messungen durchführen und auf das Kraftfahrzeug wirkende Vertikalkräfte in realistischer Weise ermitteln zu können, kann es günstig sein, wenn bei allen Messungen der Boden unter dem Fahrzeug bewegt wird und wenn der bewegte Boden durch ein umlaufendes Band gebildet wird. Auf diese Weise lässt sich eine Relativbewegung eines Kraftfahrzeugs zur Fahrbahn in realistischer und einfacher Weise nachstellen.

Wenn das Fahrzeug mindestens zwei nebeneinander angeordnete Räder aufweist, kann es vorteilhaft sein, wenn nur der Boden zwischen den mindestens zwei nebeneinander angeordneten Rädern bewegt wird. Beispielsweise kann eine solche Anordnung mit individuellen Raddreheinheiten für jedes Rad kombiniert werden, so dass sich insgesamt eine relativ zum Fahrzeug bewegte Fahrbahn simulieren lässt.

Günstigerweise wird der zweite Referenzwert $F_{vert,wind,ref2}$ zuerst gemessen. Dies hat den Vorteil, dass beispielsweise nach Messung des Vertikalkraftmesswertes $F_{vert,ges}$ der Windkanal nicht abgeschaltet werden muss.

Um den Korrekturwert $F_{vert,korr}$ direkt ermitteln zu können, ist es besonders vorteilhaft, wenn nach Messung des zweiten Referenzwertes $F_{vert,wind,ref2}$ die Windkanalwaage austariert und anschließend der erste Referenzwert $F_{vert,ref1}$ gemessen wird. Der erste Referenzwert $F_{vert,ref1}$ stimmt bei dieser Vorgehensweise direkt mit dem Korrekturwert $F_{vert,korr}$ überein, und zwar nach Betrag und Richtung.

Günstig ist es, wenn der erste Referenzwert $F_{vert,ref1}$ zuerst gemessen wird. Dies ermöglicht es, alle Justierungen und Einstellungen am Windkanal vorzunehmen, ohne dass dieser durchströmt wird.

Um den Korrekturwert $F_{vert,korr}$ auf eine andere Weise direkt ermitteln zu können, ist es besonders vorteilhaft, wenn nach Messung des ersten Referenzwertes $F_{vert,ref1}$ die Windkanalwaage austariert und anschließend der zweite Referenzwert $F_{vert,wind,ref2}$ gemessen wird. Der zweite Referenzwert $F_{vert,wind,ref2}$ stimmt bei dieser Vorgehensweise dann zumindest dem Betrag nach mit dem Korrekturwert $F_{vert,korr}$ überein.

Da bei dem erfindungsgemäßen Verfahren sehr hohe Windgeschwindigkeiten im Windkanal gefahren werden können, kann es im Verlauf der Bestimmung des zweiten Referenzwertes $F_{vert,wind,ref2}$ zu vorübergehenden und/oder dauerhaften Veränderungen sowohl am Fahrzeug als auch an den Waagenstellflächen oder den Raddreheinheiten kommen. Derartige Veränderungen ergeben sich aufgrund von plastischen Verformungen in Folge von Materialfluss. Daher ist es günstig, wenn nach Messung des zweiten Referenzwertes $F_{vert,wind,ref2}$ ein dritter Referenzwert $F_{vert,ref3}$ unter den gleichen Bedingungen wie der erste Referenzwert $F_{vert,ref1}$ gemessen wird, wenn ein Mittelwert $F_{vert,ref1,3,mittel}$ zwischen dem ersten Referenzwert $F_{vert,ref1}$ und dem dritten Referenzwert $F_{vert,ref3}$ gebildet wird und wenn zur Bestimmung des Korrekturwertes $F_{vert,korr}$ der erste Referenzwert $F_{vert,ref1}$ durch den Mittelwert $F_{vert,ref1,3,mittel}$ ersetzt wird. Damit kann der Korrekturwert $F_{vert,korr}$ durch Differenzbildung zwischen dem zweiten Referenzwert $F_{vert,wind,ref2}$ und dem Mittelwert $F_{vert,refl,3,mittel}$ bestimmt werden. Der Korrekturwert $F_{vert,korr}$ lässt sich dadurch noch genauer bestimmen.

Bei dem erfindungsgemäßen Verfahren wird das Fahrzeug am Windkanal fixiert. Damit der Korrekturwert $F_{vert,korr}$ sicher bestimmt werden kann, ist es vorteilhaft, wenn ein Steifigkeitsunterschied zwischen dem Fahrzeug und der Windkanalwaage vorgesehen ist, vorzugsweise ein Steifigkeitsunterschied von mindestens 50:1. Dadurch wird sichergestellt, dass die auf die unbedeckten Stellflächenbereiche der Waagenstellflächen wirkenden Kräfte von der Windkanalwaage sicher gemessen werden können.

Gemäß einer weiteren bevorzugten Variante des erfindungsgemäßen Verfahrens kann vorgesehen sein, dass im Verlauf eines Kraftweges der auf das Fahrzeug wirkenden Vertikalkraft von einer Karosserie oder einem Rahmen des Fahrzeugs zur Windkanalwaage ein gegenüber der Karosserie oder dem Rahmen des Fahrzeugs weniger steifer Bereich vorgesehen ist. Dies ermöglicht eine Relativbewegung der Waagenstellfläche oder der Windkanalwaage relativ zur Karosserie oder dem Rahmen des Fahrzeugs, so dass auf unbedeckte Stellflächenbereiche der Waagenstellflächen wirkende Vertikalkräfte sicher gemessen werden können.

Vorzugsweise beträgt ein Steifigkeitsunterschied zwischen der Karosserie oder dem Rahmen und dem weniger steifen Bereich mindestens 50: 1.

Vorteilhafterweise wird für das Verfahren ein reales Fahrzeug verwendet und der weniger steife Bereich durch das mindestens eine Rad des realen Fahrzeugs gebildet. Durch das verformbare Rad kann eine Relativbewegung zwischen dem am Windkanal fixierten Fahrzeug und der Windkanalwaage sicher gestellt werden, so dass Vertikalkräfte mit der Windkanalwaage gemessen werden können.

Insbesondere dann, wenn ein Modell eines Fahrzeugs mit steifen Rädern verwendet wird, kann es günstig sein, wenn der weniger steife Bereich durch das Antriebsband der Radeinheit gebildet wird. Auf diese Weise kann eine Relativbewegung der Windkanalwaage zum steifen und am Windkanal fixierten Fahrzeug sichergestellt werden.

Werden Modelle eines Fahrzeugs oder ein Fahrzeug mit steifen Rädern verwendet und ist die Waagenstellfläche oder die Raddreheinheit ebenfalls sehr steif ausgebildet, so kann es von Vorteil sein, wenn der weniger steife Bereich durch die Waagenstellfläche oder ein elastisches Zwischenelement zwischen der Waagenstellfläche und der Windkanalwaage gebildet wird. Auch eine derartige Anordnung ermöglicht eine relative Positionsänderung zwischen der Windkanalwaage und dem am Windkanal fixierten Fahrzeug.

Gemäß einer bevorzugten Variante des Verfahrens kann vorgesehen sein, dass das Fahrzeug mit der Befestigungsvorrichtung an einer Decke oder einer Quertraverse des Windkanals befestigt wird. Eine solche Form der Befestigung ist sinnvoll, wenn ein Fahrzeug keine anderen Aufnahmemöglichkeiten aufweist, wie zum Beispiel Rennfahrzeuge.

Günstig ist, wenn die Befestigungsvorrichtung mindestens einen an der Decke oder der Quertraverse des Windkanals montierten Träger umfasst. Eine solche Befestigung wirkt sich nur minimal auf den zu bestimmenden Korrekturwert $F_{vert,korr}$ aus.

Um das Kraftfahrzeug im Windkanal auf einfache Weise zu positionieren, ist es vorteilhaft, wenn eine bewegbare Quertraverse verwendet wird. Beispielsweise kann eine solche Quertraverse einen Befestigungspunkt oder mehrere Befestigungspunkte für das Fahrzeug definieren, welche in allen drei Raumrichtungen bewegt werden können.

Um einen Einfluss der Befestigungsvorrichtung auf die Messwerte zusätzlich zu verringern, ist es ein Vorteil, wenn als Träger ein aerodynamisch geformtes Schwert verwendet wird.

Alternativ und zusätzlich zu einer Befestigung des Kraftfahrzeuges an der Decke kann es günstig sein, wenn das Kraftfahrzeug mit der Befestigungsvorrichtung an einem unbewegten, feststehenden Bodenbereich des Windkanals befestigt wird.

Eine solche Befestigung ist insbesondere dann vorteilhaft, wenn als Befestigungsvorrichtung Stützelemente verwendet werden und wenn die Stützelemente in einem Unterbodenbereich des Kraftfahrzeugs angelegt und an dem unbewegten, feststehenden Bodenbereich des Windkanals befestigt werden. Sehr häufig weisen Kraftfahrzeuge im Unterbodenbereich entsprechende Aufnahmen auf, an welche Stützelemente auf einfache Weise angelegt werden können, zum Beispiel Wagenheberaufnahmen.

Insbesondere ist es von Vorteil, wenn die Stützelemente an Wagenheberaufnahmen des Unterbodenbereichs des Kraftfahrzeugs angelegt werden. Dadurch kann sichergestellt werden, dass das Fahrzeug durch die Befestigung nicht beschädigt wird.

Zur Bestimmung des Korrekturwertes $F_{vert,korr}$ muss das Kraftfahrzeug am Windkanal fixiert werden. Dagegen ist es günstig, wenn das Kraftfahrzeug während der Messung des Vertikalkraftwertes $F_{vert,ges}$ so auf der Windkanalwaage fixiert wird, dass eine Gewichtskraft $F_G$ des Kraftfahrzeugs direkt auf die Windkanalwaage wirkt. Beispielsweise kann das Kraftfahrzeug mit Stützen fixiert werden, welche direkt mit der Windkanalwaage verbunden sind und die Gewichtskraft $F_G$ des Kraftfahrzeugs auf die Windkanalwaage einleiten können. Zur Messung des Korrekturwertes $F_{vert,korr}$ ist dann in vorteilhafter Weise die Fixierung des Fahrzeuges direkt an der Windkanalwaage aufzuheben und das Fahrzeug am Windkanal zu fixieren.

Um das Messverfahren zu vereinfachen und bei unbekannter Gewichtskraft $F_G$ des Kraftfahrzeugs, ist es vorteilhaft, wenn vor Messung des Vertikalkraftwerts $F_{vert,ges}$ die Windkanalwaage austariert wird. Durch die Austarierung wird die nicht bekannte Gewichtskraft $F_G$ des Kraftfahrzeugs auf einfache Weise eliminiert, so dass der Vertikalkraftmesswert direkt ermittelt werden kann.

Die Vertikalkraft $F_{vert}$ lässt sich gemäß einer bevorzugten Variante des Verfahrens auf einfache Weise dadurch ermitteln, dass die Vertikalkraft $F_{vert}$ durch Differenzbildung des gemessenen Vertikalkraftmesswertes $F_{vert,ges}$ und des Korrekturwertes $F_{vert,korr}$ bestimmt wird. Wenn somit der Vertikalkraftmesswert $F_{vert,ges}$ und der Korrekturwert $F_{vert,korr}$ bekannt sind, beispielsweise in oben beschriebener Weise durch Messen ermittelt wurden, kann die insgesamt auf ein Kraftfahrzeug in dem Windkanal unter Windanströmung wirkende Vertikalkraft $F_{vert}$ durch Differenzbildung der angegebenen Werte bestimmt werden.

Vorteilhafterweise kann vorgesehen sein, dass mit der Windkanalwaage eine Gewichtskraft $F_G$ des Kraftfahrzeugs ohne Windanregung und während das mindestens eine Rad ruht gemessen wird, dass ein Gesamtvertikalmesswert $F_{vert,brutto}$ aller auf das Kraftfahrzeug im Windkanal wirkenden Vertikalkräfte unter Windanregung gemessen wird und dass der Vertikalkraftmesswert $F_{vert,ges}$ bestimmt wird durch Differenzbildung zwischen dem Gesamtvertikalkraftmesswert $F_{vert,brutto}$ und der Gewichtskraft $F_G$ des Kraftfahrzeugs.

Die eingangs gestellt Aufgabe wird ferner erfindungsgemäß gelöst durch eine Vorrichtung zum Durchführen eines der oben beschriebenen Verfahren, welche eine Befestigungsvorrichtung zum Fixieren des Kraftfahrzeugs am Windkanal umfasst. Mit einer solchen Vorrichtung lässt sich das Verfahren auf einfache Weise durchführen. Insbesondere lässt sich das Kraftfahrzeug wie gewünscht mit der Befestigungsvorrichtung am Windkanal fixieren.

Besonders vorteilhaft ist es, wenn mindestens eine Raddreheinheit vorgesehen ist zum Antreiben des mindestens einen Rades. Damit kann eine Relativbewegung zwischen dem Fahrzeug und einer Fahrbahn simuliert werden.

Günstigerweise sind mehrere Raddreheinheiten vorgesehen und umfasst jede der Raddreheinheiten eine Waagenstellfläche. Damit können die Räder des Fahrzeugs einzeln oder selektiv angetrieben werden, wobei die Raddreheinheit und die Waagenstellfläche eine Einheit bilden.

Vorteilhaft kann es jedoch auch sein, wenn eine Raddreheinheit vorgesehen ist, welche ein Antriebsband umfasst, welches eine Länge aufweist, die mindestens einem Radstand des Fahrzeugs entspricht, und welches eine Breite aufweist, die mindestens einer Breite des Fahrzeugs entspricht, und wenn für jedes der Räder eine Waagenstellfläche unter dem Antriebsband angeordnet ist. Mit einer solchen Raddreheinheit lassen sich nicht nur die Räder antreiben, sondern gleichzeitig auch eine unter dem Fahrzeug wegbewegte Fahrbahn simulieren.

Vorteilhafterweise kann zum unbeweglichen Festlegen einer Radaufhängung des mindestens einen Rades relativ zur Karosserie des Fahrzeuges mindestens eine Verriegelungsvorrichtung vorgesehen sein. Mit einer solchen Verriegelungsvorrichtung lässt sich die Radaufhängung relativ zur Karosserie des Fahrzeugs fixieren, also das Fahrzeug insgesamt versteifen.

Damit zu bestimmende Messwerte auf einfache Weise direkt bestimmt werden können, ist es vorteilhaft, wenn die Windkanalwaage austarierbar ist. Beispielsweise lässt sich auf diese Weise eine Gewichtskraft des Fahrzeugs austarieren. Ferner lässt sich auch einer der beiden Referenzwerte nach Messung austarieren und der andere der beiden Referenzwerte direkt bestimmen.

Um besonders realistische Bedingungen für Messungen an einem fahrenden Fahrzeug herstellen zu können, ist vorzugsweise ein unter dem Fahrzeug in dessen Längsrichtung bewegbarer, durch ein umlaufendes, zwischen den Rädern angeordnetes Band gebildeter Boden vorgesehen.

Günstigerweise ist das Fahrzeug mit der Befestigungsvorrichtung an einer Decke oder einer Quertraverse des Windkanals befestigbar. Dies hat den Vorteil, dass Fahrzeuge, welche keine besonderen Befestigungspunkte aufweisen, an welchen Befestigungselemente mit dem Windkanalboden verbunden werden können, trotzdem am Windkanal fixierbar sind.

Um einen Luftwiderstand und damit einen Einfluss der Befestigungsvorrichtung auf Messwerte zu verringern, ist es günstig, wenn die Befestigungsvorrichtung mindestens einen an der Decke oder der Quertraverse des Windkanals montierbaren Träger umfasst.

Um mögliche Einflüsse und damit Messfehler aufgrund der Befestigungsvorrichtung und deren Form zu minimieren, ist es vorteilhaft, wenn der Träger ein aerodynamisch geformtes Schwert ist.

Besonders einfach lässt sich das Kraftfahrzeug im Windkanal positionieren, wenn die Quertraverse im Windkanal bewegbar ist. Beispielsweise kann die Quertraverse in allen drei Raumrichtungen bewegbar ausgebildet sein.

Auf besonders einfache Weise lässt sich das Kraftfahrzeug am Windkanal fixieren, wenn das Fahrzeug mit der Befestigungsvorrichtung an einem unbewegten, feststehenden Bodenbereich des Windkanals befestigbar ist. Auf diese Weise kann auf eine Quertraverse und damit auf einen üblicherweise großen und unhandlichen Aufbau im Windkanal selbst gänzlich verzichtet werden.

Besonders günstig ist es, wenn die Befestigungsvorrichtung Stützelemente umfasst und wenn die Stützelemente an einem Unterbodenbereich des Fahrzeugs anlegbar und an einem unbewegten, feststehenden Bodenbereich des Windkanals befestigbar sind. Derartige Stützelemente lassen sich besonders klein und kompakt ausbilden, bieten nur eine geringe Angriffsfläche für die Windströmung im Windkanal und tragen nur zu einem minimalen oder nahezu vernachlässigbaren Fehler bei der Bestimmung des Korrekturwertes $F_{vert,korr}$ bei.

Ferner lässt sich das Kraftfahrzeug am Windkanal besonders sicher fixieren, wenn die Stützelemente an Wagenheberaufnahmen des Unterbodenbereichs des Fahrzeugs anlegbar sind.

Damit sämtliche vom Fahrzeug ausgeübten oder auf dieses einwirkende Vertikalkräfte bestimmbar sind, ist gemäß einer bevorzugten Ausführungsform der Erfindung vorgesehen, dass das Fahrzeug während der Messung des Vertikalkraftmesswertes $F_{vert,ges}$ so auf der Windkanalwaage fixierbar ist, dass eine Gewichtskraft $F_G$ des Fahrzeugs direkt auf die Windkanalwaage wirkt. Beispielsweise kann die Windkanalwaage in Form eines Unterflurwägesystems ausgebildet sein. Ferner können Stützen vorgesehen sein, mit welchen sich eine Gewichtskraft des Fahrzeugs direkt auf das Unterflurwegesystem einleiten lässt.

Um Kraftfahrzeuge mit vier Rädern auf einfache Weise vermessen zu können, umfasst die Windkanalwaage vorzugsweise vier Raddreheinheiten, mit welchen sich alle vier Räder des Kraftfahrzeugs gleichzeitig antreiben lassen können.

Damit die Verarbeitung von ermittelten Messwerten vereinfacht und automatisiert werden kann, ist es günstig, wenn eine Datenverarbeitungsanlage vorgesehen ist zum Einlesen und Verarbeiten der mit der Windkanalwaage ermittelten Messwerte zum automatischen Bestimmen des Korrekturwertes $F_{vert,korr}$ und/oder der Vertikalkraft $F_{vert}$. Insbesondere kann beispielsweise auch vorgesehen sein, dass mit der Datenverarbeitungsanlage eine Steuereinheit verbunden ist und angesteuert wird, mit welcher Messwerte in Abhängigkeit von Windgeschwindigkeiten automatisch aufgezeichnet werden können.

Die nachfolgende Beschreibung bevorzugter Varianten des erfindungsgemäßen Verfahrens dient im Zusammenhang mit der Zeichnung der näheren Erläuterung. Es zeigen:

Figur 1: eine teilweise geschnittene Seitenansicht durch einen Windkanal bei konventioneller Kräftemessung am Fahrzeug;

Figur 2:    eine Ansicht ähnlich Figur 1, jedoch mit am Windkanalboden befestigtem Kraftfahrzeug; und

Figur 3:    eine Ansicht ähnlich Figur 1, jedoch mit mittels eines Schwertes an einer Decke des Windkanals befestigtem Kraftfahrzeug.

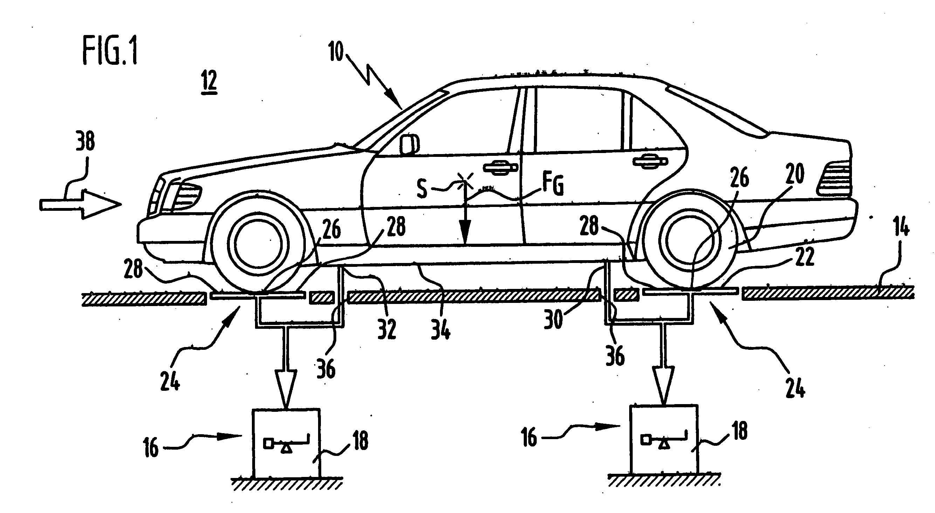

In Figur 1 ist ein insgesamt mit dem Bezugszeichen 10 versehenes Kraftfahrzeug dargestellt, welches in einem Windkanal 12 angeordnet ist. Unterhalb eines Bodens 14 des Windkanals ist ein Unterflurwägesystem angeordnet, welches insgesamt mit dem Bezugszeichen 16 versehen ist und vier Wägezellen 18 umfasst.

Jedes der 4 Räder 20 des Kraftfahrzeugs 10 ruht auf einer Stellfläche 22 einer insgesamt mit dem Bezugszeichen 24 versehenen, antreibbaren Laufbandeinheit zum Antreiben der Räder 20. Die tatsächliche Radaufstandfläche 26 jedes Rades 20 ist wesentlich kleiner die Stellfläche 22, so dass jede Laufbandeinheit 24, auch als "Platine" bezeichnet, einen vom Rad 20 unbedeckten Stellflächenbereich 28 umfasst. Das Kraftfahrzeug 10 ist ferner über nicht näher im Detail gezeichnete Stützelemente 30 direkt mit den Wägezellen 18 verbunden, wobei jedes Stützelement vorzugsweise im Bereich einer Wagenheberaufnahme 32 im Schwellerbereich 34 des Kraftfahrzeugs 10 angreift. Die Stützelemente 30 sind durch Öffnungen 36 im Boden 14 hindurchgeführt. Dadurch wird die im Schwerpunkt des Kraftfahrzeugs 10 angreifende Gewichtskraft $F_G$ direkt auf die Wägezellen 18 eingeleitet. Die Gewichtskraft $F_G$ lässt sich mit dem Unterflurwägesystem 16 direkt bestimmen, wenn das Fahrzeug 10 nicht angeströmt wird und die Laufbandeinheiten 24 stillstehen.

Mit der Anordnung gemäß Figur 1 lässt sich der mit dem Unterflurwägesystem 16 messbare Vertikalkraftmesswert $F_{vert,ges}$ einer insgesamt auf das Kraftfahrzeug 10 im Windkanal wirkenden Vertikalkraft $F_{vert}$ unter Windanströmung ermitteln. Die Laufbandeinheiten 24 können entweder angetrieben werden oder stillstehen. Der Vertikalkraftmesswert $F_{vert,ges}$ lässt sich direkt ermitteln, wenn vor Beaufschlagung des Kraftfahrzeugs 10 in Figur 1 einer symbolisch mit einem Pfeil 38 angedeuteten Windströmung und bei stillstehenden Laufbandeinheiten 24 das Unterflurwägesystem austariert wird. Wird dann das Kraftfahrzeug 10 mit einer Windströmung beaufschlagt, so wirken auf das Kraftfahrzeug 10 Auftriebs- bzw. Abtriebskräfte, welche mit dem Unterflurwägesystem 16 ermittelt werden können. Der Vertikalkraftmesswert $F_{vert,ges}$ kann in Abhängigkeit von stillstehenden oder angetriebenen Rädern 20 ermittelt werden.

Ist das Unterflurwägesystem 16 nicht mit einer Tarafunktion ausgestattet, so lässt sich der Vertikalkraftmesswert $F_{vert,ges}$ ermitteln durch Differenzbildung zwischen der Summe aller auf das Unterflurwägesystem 16 einwirkenden Kräfte $F_{vert,brutto}$ und der Gewichtskraft $F_G$ des Kraftfahrzeugs 10. Selbstverständlich kann vor einer solcher Messung das Unterflurwägesystem 16 auch auf 0 gesetzt, also austariert werden. Die entsprechende Gleichung zur Bestimmung des Vertikalkraftmesswert $F_{vert,ges}$ lautet daher:

$$F_{vert,ges}(Rad) = F_{vert,brutto}(Rad) - F_G \qquad\qquad (1)$$

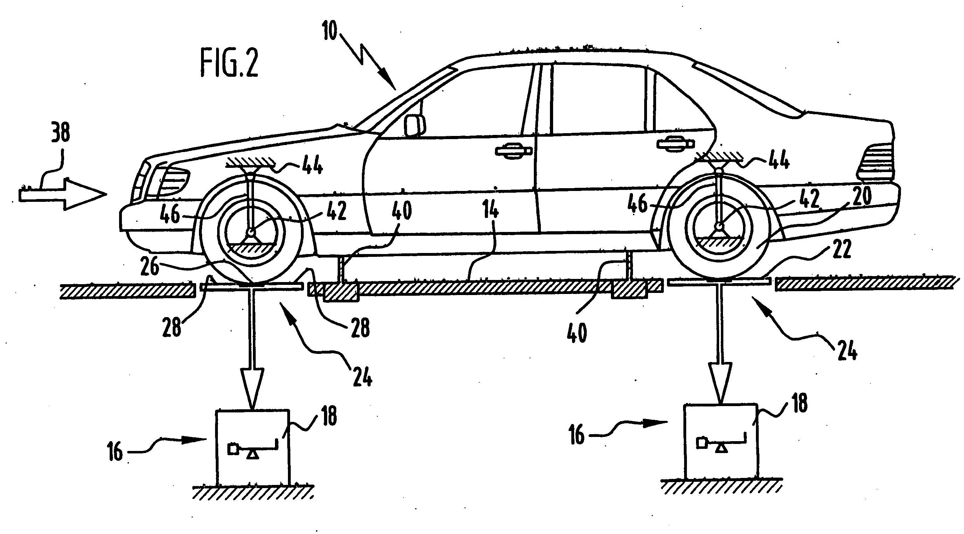

Da die Radaufstandsflächen 26 nicht die gesamte Stellfläche 22 der Laufbandeinheiten 24 bedecken, kann eine auf das Kraftfahrzeug 10 im Windkanal 12 einwirkende Windanströmung, angedeutet durch Pfeil 38, zu Auftriebskräften führen, welche auf die unbedeckten Stellflächenbereiche 28 der Laufbandeinheiten 24 einwirken. Diese einwirkenden Auftriebskräfte können mittels des erfindungsgemäßen Verfahrens und der erfindungsgemäßen Vorrichtung bestimmt werden. Hierzu werden zunächst die Stützelemente 30 entfernt und die Öffnungen 36 im Boden des Windkanals 12 verschlossen. Dann werden Stützen 40 an die Wagenheberaufnahmen 32 des Kraftfahrzeugs 10 angelegt und am Boden 14 des Windkanals 12 fixiert. Auf diese Weise nimmt der Boden 14 des Windkanals 12 die Gewichtskraft $F_G$ des Kraftfahrzeugs 10 auf, nicht das Unterflurwägesystem 16 wie bei der Anordnung gemäß Figur 1. Zusätzlich wird jede Radaufhängung relativ zur schematisch dargestellten Karosserie 44 mittels eines Verriegelungsbolzens 46 verriegelt, so dass insgesamt ein starrer Körper ausgebildet wird. Die gegenüber der in Figur 1 geänderte Anordung des Kraftfahrzeugs 10 im Windkanal 12 ist in Figur 2 dargestellt.

Zur Bestimmung der auf die unbedeckten Stellflächenbereiche 28 einwirkenden Vertikalkräfte, des sogenannten Korrekturwerts $F_{vert,korr}$, können bei einer Anordnung gemäß Figur 2 zwei Referenzwerte bestimmt, nämlich ein erster Referenzwert $F_{vert,ref1}$ und ein zweiter Referenzwert $F_{vert,wind,ref2}$. Der zweite Referenzwert $F_{vert,wind,ref2}$ wird bestimmt, indem das Kraftfahrzeug 10 bei einer Anordnung gemäß Figur 2 mit Windanströmung, angedeutet durch Pfeil 38, beaufschlagt wird.

Nach Messung des zweiten Referenzwertes wird die Windanströmung abgeschaltet und die auf das Unterflurwägesystem 16 einwirkende Kraft durch Messung des ersten Referenzwertes $F_{vert,ref1}$ bestimmt. Der Korrekturwert $F_{vert,korr}$ ergibt sich dann als Differenzwert der beiden Referenzwerte gemäß folgender Gleichung:

$$F_{vert,korr}(Rad) = F_{vert,wind,ref2}(Rad) - F_{vert,ref1}(Rad) \qquad (2)$$

Wenn nach Messung des Referenzwertes $F_{vert,wind,ref2}$ das Unterflurwägesystem 16 austariert wird, also der zweite Referenzwert $F_{vert,wind,ref2}$ gleich Null gesetzt wird, kann der Korrekturwert $F_{vert,korr}$ direkt bestimmt werden durch Messung des ersten Referenzwertes $F_{vert,ref1}$.

Sehr häufig stellt sich jedoch das Problem, dass aufgrund der Windanströmung im Windkanal 12 mit Windgeschwindigkeit von bis zu 280 km/h eine plastische Verformung am Kraftfahrzeug 10, den Rädern 20, den Stellflächen 22 oder den Laufbandeinheiten 24 im Verlauf der Messung des zweiten Referenzwertes $F_{vert,wind,ref2}$ auftreten kann. Daher wird alternativ zunächst der erste Referenzwert $F_{vert,ref1}$ ohne Windanströmung bestimmt. Danach wird das Kraftfahrzeug 10 mit einer wie in Figur 2 durch Pfeil 38 angedeuteten Windanströmung beaufschlagt und dabei der zweite Referenzwert $F_{vert,wind,ref2}$ bestimmt. Nach dem Abschalten der Windanströmung wird ein dritter Referenzwert $F_{vert,ref3}$ unter den gleichen Messbedingungen wie beim Messen des ersten Referenzwertes gemessen, welcher jedoch vom ersten Referenzwert $F_{vert,ref1}$ abweichen kann. Zur Bestimmung des Korrekturwertes $F_{vert,korr}$ kann dann zunächst ein Mittelwert $F_{vert,ref1,3,mittel}$ durch Mittelwertbildung aus dem ersten Referenzwert $F_{vert,ref1}$ und dem dritten Referenzwert $F_{vert,ref3}$ gebildet werden gemäß folgender Gleichung:

$$F_{vert,ref1,3,mittel}(Rad) = (F_{vert,ref1}(Rad) + F_{vert,ref3}(Rad)) / 2 \qquad (3)$$

der Korrekturwert $F_{vert,korr}$ ergibt sich dann abweichend von Gleichung (2) dadurch, dass der erste Referenzwert $F_{vert,ref1}$ in Gleichung (2) durch den Mittelwert $F_{vert,ref1,3,mittel}$ ersetzt wird:

$$F_{vert,korr}(Rad) = F_{vert,wind,ref2}(Rad) - F_{vert,ref1,3,mittel}(Rad) \qquad (4)$$

Nachdem sowohl der Vertikalkraftmesswert $F_{vert,ges}$, wie oben beschrieben, bestimmt wurde und der Korrektur $F_{vert,korr}$, ebenfalls wie oben beschrieben, gemäß Gleichung (2) oder (4) ermittelt wurde, lässt sich die aufgrund einer Windanströmung auf das Kraftfahrzeug 10 einwirkende Vertikalkraft $F_{vert}$ gemäß folgender Gleichung durch Differenzbildung der Beträge des Vertikalkraftmesswertes $F_{vert,ges}$ und des Korrekturwertes $F_{vert,korr}$ ermitteln:

$$F_{vert}(Rad) = |F_{vert,ges}(Rad)| - |F_{vert,korr}(Rad)| \qquad (5)$$

Die Bestimmung der tatsächlich wirkenden Vertikalkraft $F_{vert}$ lässt sich sowohl bei stillstehenden Rädern 20 als auch bei mittels der Laufbandeinheiten 24 angetriebenen Rädern 20 ermitteln. Dies ist durch Abhängigkeit der in den Gleichungen (1), (2), (3), (4) und (5) bezeichneten Messwerte vom Parameter "Rad" angedeutet, wobei der Parameter "Rad" entweder bedeutet, dass die Räder 20 stillstehen oder dass die Räder 20 angetrieben werden. Um die gewünschten Messergebnisse zu erzielen, sollte jeweils der Parameter "Rad" bei allen Messungen den gleichen Wert annehmen, also entweder die Räder 20 immer angetrieben sein oder immer stillstehend. Allein die Gewichtskraft $F_G$ des Kraftfahrzeugs 10 wird stets bei stillstehenden Rädern 20 ermittelt.

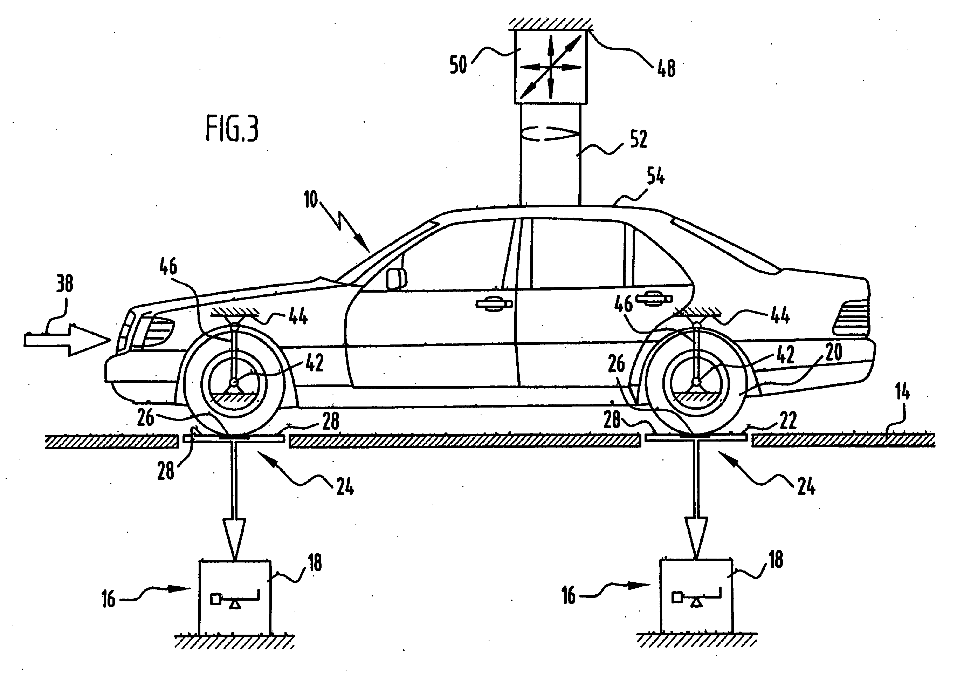

Alternativ zur Befestigung des Kraftfahrzeugs 10 am Boden 14 des Windkanals 12, wie dies in Figur 2 dargestellt ist, kann, wie in Figur 3 dargestellt, das Kraftfahrzeug 10 an einer Decke 48 oder einer Quertraverse des Windkanals 12 befestigt werden. Hierzu ist ein Antrieb 50, welcher in 3 Raumrichtungen eine Bewegung gestattet, an der Decke 48 montiert und trägt ein aerodynamisches Schwert 52, welches auf nicht dargestellte Weise am Dach 54 des Kraftfahrzeugs 10 befestigt wird.

Eine Bestimmung des Korrekturwertes $F_{vert,korr}$ wird in analoger Weise wie im Zusammenhang mit Figur 2 beschrieben durchgeführt. Selbstverständlich sollten auch bei einer Befestigung des Kraftfahrzeugs 10 an der Decke 48 des Windkanals 12 die Radaufhängungen 42 relativ zur Karosserie 44 des Kraftfahrzeugs 10 mit Verriegelungsbolzen 46 fixiert werden, um das Fahrzeug insgesamt auszusteifen.

**Patentansprüche**

1. Verfahren zum Bestimmen eines Korrekturwerts $F_{vert,korr}$ zum Korrigieren eines mit einer Windkanalwaage gemessenen Vertikalkraftmesswerts $F_{vert,ges}$ einer insgesamt auf ein mindestens ein Rad umfassendes Fahrzeug in einem Windkanal wirkenden Vertikalkraft $F_{vert}$ unter Windanströmung, wobei der Korrekturwert $F_{vert,korr}$ einer Vertikalkraft entspricht, welche unter Windanströmung auf einen von dem mindestens einen Rad unbedeckten Stellflächenbereich einer Waagenstellfläche der Windkanalwaage wirkt, wobei ein erster Referenzwert $F_{vert,ref1}$ und ein zweiter Referenzwert $F_{vert,wind,ref2}$ gemessen werden, wobei während der Messung des ersten Referenzwerts $F_{vert,ref1}$ und des zweiten Referenzwerts $F_{vert,wind,ref2}$ das Fahrzeug mit einer Befestigungsvorrichtung am Windkanal fixiert wird, wobei der erste Referenzwert $F_{vert,ref1}$ ohne Windanströmung des Fahrzeugs gemessen wird, wobei der zweite Referenzwert $F_{vert,wind,ref2}$ unter Windanströmung des Fahrzeugs gemessen wird und wobei der Korrekturwert $F_{vert,korr}$ durch Differenzbildung zwischen dem zweiten Referenzwert $F_{vert,wind,ref2}$ und dem ersten Referenzwert $F_{vert,ref1}$ bestimmt wird.

2. Verfahren nach Anspruch 1, bei welchem während der Messung des ersten Referenzwerts $F_{vert,ref1}$ und des zweiten Referenzwerts $F_{vert,wind,ref2}$ eine Radaufhängung des mindestens einen Rades relativ zur Karosserie des Fahrzeugs unbeweglich festgelegt ist.

3. Verfahren nach Anspruch 2, bei welchem zum unbeweglichen Festlegen der Radaufhängung des mindestens einen Rades relativ zur Karosserie des Fahrzeugs mindestens eine Verriegelungsvorrichtung verwendet wird.

4. Verfahren nach Anspruch 3, bei welchem als Fahrzeug ein Kraftfahrzeug verwendet wird.

5. Verfahren nach einem der voranstehenden Ansprüche, bei welchem während der Messung des ersten Referenzwerts $F_{vert,ref1}$ und des zweiten Referenzwerts $F_{vert,wind,ref2}$ das Fahrzeug mit der Befestigungsvorrichtung am Windkanal so fixiert wird, dass mindestens ein Bruchteil einer Gewichtskraft $F_G$ des Fahrzeugs auf die Waagenstellfläche wirkt.

6. Verfahren nach Anspruch 5, bei welchem mindestens 75 % der Gewichtskraft $F_G$ des Fahrzeugs auf die Waagenstellfläche wirken.

7. Verfahren nach einem der voranstehenden Ansprüche, bei welchem das mindestens eine Rad während der Messung des ersten Referenzwerts $F_{vert,ref1}$ und des zweiten Referenzwerts $F_{vert,wind,ref2}$ angetrieben wird.

8. Verfahren nach Anspruch 7, bei welchem zum Antreiben des mindestens einen Rades mindestens eine Raddreheinheit verwendet wird.

9. Verfahren nach Anspruch 8, bei welchem für alle Räder des Fahrzeugs eine gemeinsame Raddreheinheit verwendet wird.

10. Verfahren nach Anspruch 9, bei welchem eine Raddreheinheit verwendet wird, welche ein Antriebsband umfasst, welches eine mit der Windströmung beaufschlagbare Länge aufweist, die mindestens einem Radstand des Fahrzeugs entspricht, und welches eine mit der Windströmung beaufschlagbare Breite aufweist, die mindestens einer Breite des Fahrzeugs entspricht, bei welchem die Waagenstellfläche durch die von der Windströmung beaufschlagbare, durch die Länge und Breite des Antriebsbandes definierte Bandfläche gebildet wird und bei welchem für jedes der Räder eine mit der Windkanalwaage verbundene Stützfläche unter dem Antriebsband angeordnet ist.

11. Verfahren nach Anspruch 8, bei welchem das Fahrzeug mehr als ein Rad aufweist und bei welchem für jedes der Räder eine eigene, ein Antriebsband und eine Waagenstellfläche umfassende Raddreheinheit vorgesehen ist.

12. Verfahren nach einem der voranstehenden Ansprüche, bei welchem während der Messung des Vertikalkraftmesswerts $F_{vert,ges}$ das mindestens eine Rad angetrieben wird.

13. Verfahren nach einem der voranstehenden Ansprüche, bei welchem während der Messung eines Gesamtvertikalkraftmesswerts $F_{vert,brutto}$ aller auf die Windkanalwaage wirkenden Vertikalkräfte das mindestens eine Rad angetrieben wird.

14. Verfahren nach einem der voranstehenden Ansprüche, bei welchem bei allen Messungen der Boden unter dem Fahrzeug bewegt wird und bei welchem der bewegte Boden durch ein umlaufendes Band gebildet wird.

15. Verfahren nach Anspruch 14, bei welchem das Fahrzeug mindestens zwei nebeneinander angeordnete Räder aufweist und bei welchem nur der Boden zwischen den mindestens zwei nebeneinander angeordneten Rädern bewegt wird.

16. Verfahren nach einem der voranstehenden Ansprüche, bei welchem der zweite Referenzwert $F_{vert,wind,ref2}$ zuerst gemessen wird.

17. Verfahren nach Anspruch 16, bei welchem nach Messung des zweiten Referenzwert $F_{vert,wind,ref2}$ die Windkanalwaage austariert und anschließend der erste Referenzwert $F_{vert,ref1}$ gemessen wird.

18. Verfahren nach einem der voranstehenden Ansprüche, bei welchem der erste Referenzwert $F_{vert,ref1}$ zuerst gemessen wird.

19. Verfahren nach Anspruch 18, bei welchem nach Messung des ersten Referenzwerts $F_{vert,ref1}$ die Windkanalwaage austariert und anschließend der zweite Referenzwert $F_{vert,wind,ref2}$ gemessen wird.

20. Verfahren nach Anspruch 19, bei welchem nach Messung des zweiten Referenzwertes $F_{vert,wind,ref2}$ ein dritter Referenzwert $F_{vert,ref3}$ unter den gleichen Bedingungen wie der erste Referenzwert $F_{vert,ref1}$ gemessen wird, bei welchem ein Mittelwert $F_{vert,ref1,3,mittel}$ zwischen dem ersten Referenzwert $F_{vert,ref1}$ und dem dritten Referenzwert $F_{vert,ref3}$ gebildet wird und bei welchem zur Bestimmung des Korrekturwerts $F_{vert,korr}$ der erste Referenzwert $F_{vert,ref1}$ durch den Mittelwert $F_{vert,ref1,1,3,mittel}$ ersetzt wird.

21. Verfahren nach einem der voranstehenden Ansprüche, bei welchem ein Steifigkeitsunterschied zwischen dem Fahrzeug und der Windkanalwaage vorgesehen ist, vorzugsweise ein Steifigkeitsunterschied von mindestens 50:1.

22. Verfahren nach einem der voranstehenden Ansprüche, bei welchem im Verlauf eines Kraftweges der auf das Fahrzeug wirkenden Vertikalkraft von einer Karosserie oder einem Rahmen des Fahrzeugs zur Windkanalwaage ein gegenüber der Karosserie oder dem Rahmen des Fahrzeugs weniger steifer Bereich vorgesehen ist.

23. Verfahren nach Anspruch 22, bei welchem ein Steifigkeitsunterschied zwischen der Karosserie oder dem Rahmen und dem weniger steifen Bereich mindestens 50:1 beträgt.

24. Verfahren nach einem der Ansprüche 22 oder 23, bei welchem ein reales Fahrzeug verwendet wird und bei welchem der weniger steife Bereich durch das mindestens eine Rad des realen Fahrzeugs gebildet wird.

25. Verfahren nach einem der Ansprüche 22 oder 23, bei welchem ein Modell eines Fahrzeugs mit steifen Rädern verwendet wird und bei welchem der weniger steife Bereich durch das Antriebsband der Raddreheinheit gebildet wird.

26. Verfahren nach einem der Ansprüche 22 oder 23, bei welchem ein Modell eines Fahrzeugs oder ein Fahrzeug mit steifen Rädern verwendet wird und bei welchem der weniger steife Bereich durch die Waagenstellfläche oder ein elastisches Zwischenelement zwischen der Waagenstellfläche und der Windkanalwaage gebildet wird.

27. Verfahren nach einem der voranstehenden Ansprüche, bei welchem das Fahrzeug mit der Befestigungsvorrichtung an einer Decke oder einer Quertraverse des Windkanals befestigt wird.

28. Verfahren nach Anspruch 27, bei welchem die Befestigungsvorrichtung mindestens einen an der Decke oder der Quertraverse des Windkanals montierten Träger umfasst.

29. Verfahren nach einem der Ansprüche 27 oder 28, bei welchem eine bewegbare Quertraverse verwendet wird.

30. Verfahren nach Anspruch 28 oder 29, bei welchem als Träger ein aerodynamisch geformtes Schwert verwendet wird.

31. Verfahren nach einem der Ansprüche 1 bis 26, bei welchem das Fahrzeug mit der Befestigungsvorrichtung an einem unbewegten, feststehenden Bodenbereich des Windkanals befestigt wird.

32. Verfahren nach Anspruch 31, bei welchem als Befestigungsvorrichtung Stützelemente verwendet werden und bei welchem die Stützelemente an einem Unterbodenbereich des Fahrzeugs angelegt und an dem unbewegten, feststehenden Bodenbereich des Windkanals befestigt werden.

33. Verfahren nach Anspruch 32, bei welchem die Stützelemente an Wagenheberaufnahmen des Unterbodenbereichs des Fahrzeugs angelegt werden.

34. Verfahren nach einem der voranstehenden Ansprüche, bei welchem das Fahrzeug während der Messung des Vertikalkraftmesswerts $F_{vert,ges}$ so auf der Windkanalwaage fixiert wird, dass eine Gewichtskraft $F_G$ des Fahrzeugs direkt auf die Windkanalwaage wirkt.

35. Verfahren nach einem der voranstehenden Ansprüche, bei welchem vor Messung des Vertikalkraftmesswerts $F_{vert,ges}$ die Windkanalwaage austariert wird.

36. Verfahren nach einem der voranstehenden Ansprüche, bei welchem die Vertikalkraft $F_{vert}$ durch Differenzbildung des gemessenen Vertikalkraftmesswerts $F_{vert,ges}$ und des Korrekturwerts $F_{vert,korr}$ bestimmt wird.

37. Verfahren nach einem der voranstehenden Ansprüche, bei welchem mit der Windkanalwaage eine Gewichtskraft $F_G$ des Fahrzeugs ohne Windanregung und während das mindestens einen Rades ruht gemessen wird, bei welchem ein Gesamtvertikalkraftmesswert $F_{vert,brutto}$ aller auf das Fahrzeug im Windkanal wirkenden Vertikalkräfte unter Windanregung gemessen wird und bei welchem der Vertikalkraftmesswert $F_{vert,ges}$ bestimmt wird durch Differenzbildung zwischen dem Gesamtvertikalkraftmesswert $F_{vert,brutto}$ und der Gewichtskraft $F_G$ des Fahrzeugs.

38. Vorrichtung zum Durchführen eines Verfahrens nach einem der voranstehenden Ansprüche, umfassend einen Windkanal (12), eine Windkanalwaage (16) und mindestens eine mit der Windkanalwaage (16) verbundene, zum Stützen mindestens eines Rades (20) eines Fahrzeugs (10) vorgesehene Waagenstellfläche (22), **gekennzeichnet durch** eine Befestigungsvorrichtung (40; 52) zum Fixieren des Fahrzeugs (10) am Windkanal (12).

39. Vorrichtung nach Anspruch 38, wobei mindestens eine Raddreheinheit (24) vorgesehen ist zum Antreiben des mindestens einen Rades (20).

40. Vorrichtung nach Anspruch 39, wobei mehrere Raddreheinheiten (24) vorgesehen sind und wobei jede der Raddreheinheiten (24) eine Waagenstellfläche (22) umfasst.

41. Vorrichtung nach Anspruch 39, wobei eine Raddreheinheit (24) vorgesehen ist, welche eine Antriebsband umfasst, welches eine Länge aufweist, die mindestens einem Radstand des Fahrzeugs (10) entspricht, und welches eine Breite aufweist, die mindestens einer Breite des Fahrzeugs (10) entspricht, und wobei für jedes der Räder (20) eine Waagenstellfläche (22) unter dem Antriebsband angeordnet ist.

42. Vorrichtung nach einem der Ansprüche 38 bis 41, wobei zum unbeweglichen Festlegen einer Radaufhängung (42) des mindestens einen Rades (20) relativ zur Karosserie (44) des Fahrzeugs (10) mindestens eine Verriegelungsvorrichtung (46) vorgesehen ist.

43. Vorrichtung nach einem der Ansprüche 38 bis 42, wobei die Windkanalwaage (16) austarierbar ist.

44. Vorrichtung nach einem der Ansprüche 38 bis 43, wobei ein unter dem Fahrzeug (10) bewegbarer, durch ein umlaufendes Band gebildeter Boden vorgesehen ist.

45. Vorrichtung nach einem der Ansprüche 38 bis 44, wobei das Fahrzeug (10) mit der Befestigungsvorrichtung (52) an einer Decke (48) oder einer Quertraverse (50) des Windkanals (12) befestigbar ist.

46. Vorrichtung nach Anspruch 45, wobei die Befestigungsvorrichtung mindestens einen an der Decke (48) oder der Quertraverse (50) des Windkanals (12) montierbaren Träger (52) umfasst.

47. Vorrichtung nach Anspruch 46, wobei der Träger ein aerodynamisch geformtes Schwert (52) ist.

48. Vorrichtung nach einem der Ansprüche 45 bis 47, wobei die Quertraverse (50) im Windkanal (12) bewegbar ist.

49. Vorrichtung nach einem der Ansprüche 38 bis 44, wobei das Fahrzeug (10) mit der Befestigungsvorrichtung (40) an einem unbewegten, feststehenden Bodenbereich (14) des Windkanals (12) befestigbar ist.

50. Vorrichtung nach Anspruch 49, wobei die Befestigungsvorrichtung Stützelemente (40) umfasst und wobei die Stützelemente (40) an einem Unterbodenbereich (34) des Fahrzeugs (10) anlegbar und an einem unbewegten, feststehenden Bodenbereich (14) des Windkanals (12) befestigbar sind.

51. Vorrichtung nach Anspruch 50, wobei die Stützelemente (40) an Wagenheberaufnahmen (32) des Unterbodenbereichs (34) des Fahrzeugs (10) anlegbar sind.

52. Vorrichtung nach einem der Ansprüche 38 bis 51, wobei das Fahrzeug (10) während der Messung des Vertikalkraftmesswerts $F_{vert,ges}$ so auf der Windkanalwaage (16) fixierbar ist, dass eine Gewichtskraft $F_G$ des Fahrzeugs (10) direkt auf die Windkanalwaage (16) wirkt.

53. Vorrichtung nach einem der Ansprüche 38 bis 52, wobei die Windkanalwaage (16) vier Raddreheinheiten (24) umfasst.

54. Vorrichtung nach einem der Ansprüche 38 bis 53, wobei eine Datenverarbeitungsanlage vorgesehen ist zum Einlesen und Verarbeiten der mit der Windkanalwaage (16) ermittelten Messwerte zum automatischen Bestimmen des Korrekturwerts $F_{vert,korr}$ und der Vertikalkraft $F_{vert}$.

**Claims**

1. A method for determining a correction value $F_{vert,korr}$ for correcting a measured value $F_{vert,ges}$ of a vertical force as measured by a wind tunnel balance of an overall vertical force $F_{vert}$ acting on a vehicle which comprises at least one wheel and is located in a wind tunnel subjected to wind flow, wherein the correction value $F_{vert,korr}$ corresponds to a vertical force which acts on a placement area region of a balance placement area of the wind tunnel balance that is not covered by the at least one wheel when subjected to wind flow, wherein a first reference value $F_{vert,ref1}$ and a second reference value $F_{vert,wind,ref2}$ are measured, wherein, during the measurement of the first reference value $F_{vert,ref1}$ and the second reference value $F_{vert,wind,ref2}$, the vehicle is fixed to the wind tunnel by means of a securing device, wherein the first reference value $F_{vert,ref1}$ is measured without subjecting the vehicle to wind flow, wherein the second reference value $F_{vert,wind,ref2}$ is measured whilst the vehicle is subjected to wind flow, and wherein the correction value $F_{vert,korr}$ is determined by forming the difference between the second reference value $F_{vert,wind,ref2}$ and the first reference value $F_{vert,ref1}$.

2. A method in accordance with Claim 1, in which, during the measurement of the first reference value $F_{vert,ref1}$ and the second reference value $F_{vert,wind,ref2}$, a wheel suspension of the at least one wheel is fixed immovably relative to the bodywork of the vehicle.

3. A method in accordance with Claim 2, in which at least one locking device is used for immovably fixing the wheel suspension of the at least one wheel relative to the bodywork of the vehicle.

4. A method in accordance with Claim 3, in which a vehicle in the form of a motor vehicle is used.

5. A method in accordance with any of the preceding Claims, in which, during the measurement of the first reference value $F_{vert,ref1}$ and the second reference value $F_{vert,wind,ref2}$, the vehicle is fixed to the wind tunnel by the securing device in such a way that at least a fraction of a weight force $F_G$ of the vehicle acts on the balance placement area.

6. A method in accordance with Claim 5, in which at least 75 % of the weight force $F_G$ of the vehicle acts on the balance placement area.

7. A method in accordance with any of the preceding Claims, in which the at least one wheel is driven during the measurement of the first reference value $F_{vert,ref1}$ and the second reference value $F_{vert,wind,ref2}$.

8. A method in accordance with Claim 7, in which at least one wheel rotating unit is used for driving the at least one wheel.

9. A method in accordance with Claim 8, in which a common wheel rotating unit is used for all the wheels of the vehicle.

**10.** A method in accordance with Claim 9, in which there is used a wheel rotating unit which comprises a drive belt having a length subjectable to the wind flow that corresponds to at least one wheel base of the vehicle and having a width subjectable to the wind flow that corresponds to at least a width of the vehicle, wherein the balance placement area is formed by the belt surface subjectable to the wind flow and defined by the length and width of the drive belt, and wherein a supporting surface that is connected to the wind tunnel balance is arranged under the drive belt for each of the wheels.

**11.** A method in accordance with Claim 8, in which the vehicle comprises more than one wheel and in which an independent wheel rotating unit comprising a drive belt and a balance placement area is provided for each of the wheels.

**12.** A method in accordance with any of the preceding Claims, in which the at least one wheel is driven during the measurement of the measured value $F_{vert,ges}$ of the vertical force.

**13.** A method in accordance with any of the preceding Claims, in which the at least one wheel is driven during the measurement of a total vertical force measured value $F_{vert,brutto}$ of all the vertical forces acting on the wind tunnel balance.

**14.** A method in accordance with any of the preceding Claims, in which the floor under the vehicle is moved during all the measurements and in which the moving floor is formed by a circulating belt.

**15.** A method in accordance with Claim 14, in which the vehicle has at least two adjacent wheels and in which only the floor between the at least two adjacent wheels is moved.

**16.** A method in accordance with any of the preceding Claims, in which the second reference value $F_{vert,wind,ref2}$ is measured first.

**17.** A method in accordance with Claim 16, in which, after the measurement of the second reference value $F_{vert,wind,ref2}$, the wind tunnel balance is tared and thereafter, the first reference value $F_{vert,ref1}$ is measured.

**18.** A method in accordance with any of the preceding Claims, in which the first reference value $F_{vert,ref1}$ is measured first.

**19.** A method in accordance with Claim 18, in which after the measurement of the first reference value $F_{vert,ref1}$ the wind tunnel balance is tared and thereafter, the second reference value $F_{vert,wind,ref2}$ is measured.

**20.** A method in accordance with Claim 19, in which, after measurement of the second reference value $F_{vert,wind,ref2}$, a third reference value $F_{vert,ref3}$ is measured under the same conditions as the first reference value $F_{vert,ref1}$, wherein an average value $F_{vert,ref1,3,mittel}$ is formed between the first reference value $F_{vert,ref1}$ and the third reference value $F_{vert,ref3}$ and wherein the first reference value $F_{vert,ref1}$ is replaced by the average value $F_{vert,ref1,3,mittel}$ for the purposes of determining the correction value $F_{vert,korr}$.

**21.** A method in accordance with any of the preceding Claims, in which there is provided a difference in stiffness between the vehicle and the wind tunnel balance, preferably a stiffness difference of at least 50:1.

**22.** A method in accordance with any of the preceding Claims, in which, in the course of a path followed by the vertical force acting on the vehicle from a bodywork or a frame of the vehicle to the wind tunnel balance, there is provided a region of lesser stiffness compared with the bodywork or the frame of the vehicle.

**23.** A method in accordance with Claim 22, in which the difference in stiffness between the bodywork or the frame and the less stiff region amounts to at least 50: 1.

**24.** A method in accordance with either of the Claims 22 or 23, in which an actual vehicle is used, and in which the less stiff region is formed by the at least one wheel of the actual vehicle.

**25.** A method in accordance with either of the Claims 22 or 23, in which a model of a vehicle with stiff wheels is used, and in which the less stiff region is formed by the drive belt of the wheel rotating unit.

**26.** A method in accordance with either of the Claims 22 or 23, in which a model of a vehicle or a vehicle with stiff wheels is used, and in which the less stiff region is formed by the balance placement area or a resilient intermediate element between the balance placement area and the wind tunnel balance.

27. A method in accordance with any of the preceding Claims, in which the vehicle is fixed to a roof or a crossbeam of the wind tunnel by means of the securing device.

28. A method in accordance with Claim 27, in which the securing device comprises at least one carrier mounted on the roof or the crossbeam of the wind tunnel.

29. A method in accordance with either of the Claims 27 or 28, in which a movable crossbeam is used.

30. A method in accordance with Claim 28 or 29, in which an aerodynamically shaped strut is used as the carrier.

31. A method in accordance with any of the Claims 1 to 26, in which the vehicle is fixed to an immovable, fixed base region of the wind tunnel by the securing device.

32. A method in accordance with Claim 31, in which supporting elements are used as the securing device, and in which the supporting elements are placed in an underbody region of the vehicle and fixed to the immovable, fixed base region of the wind tunnel.

33. A method in accordance with Claim 32, in which the supporting elements are placed on jacking points of the underbody region of the vehicle.

34. A method in accordance with any of the preceding Claims, in which the vehicle is fixed on the wind tunnel balance during the process of measuring the measured value $F_{vert,ges}$ of the vertical force in such a way that a weight force $F_G$ of the vehicle acts directly on the wind tunnel balance.

35. A method in accordance with any of the preceding Claims, in which the wind tunnel balance is tared before the process of measuring the measured value $F_{vert,ges}$ of the vertical force.

36. A method in accordance with any of the preceding Claims, in which the vertical force $F_{vert}$ is determined by forming the difference between the measured value $F_{vert,ges}$ of the measured vertical force and the correction value $F_{vert,korr}$.

37. A method in accordance with any of the preceding Claims, in which a weight force $F_G$ of the vehicle without wind activation and whilst the at least one wheel is at rest is measured by the wind tunnel balance, in which a total vertical force measured value $F_{vert,brutto}$ of all the vertical forces acting on the vehicle in the wind tunnel with wind activation is measured, and in which the measured value $F_{vert,ges}$ of the vertical force is determined by forming the difference between the total vertical force measured value $F_{vert,brutto}$ and the weight force $F_G$ of the vehicle.

38. A device for carrying out a method in accordance with any of the preceding Claims, comprising a wind tunnel (12), a wind tunnel balance (16) and at least one balance placement area (22) that is connected to the wind tunnel balance (16) and is provided for supporting at least one wheel (20) of a vehicle (10), **characterized by** a securing device (40; 52) for fixing the vehicle (10) to the wind tunnel (12).

39. A device in accordance with Claim 38, wherein at least one wheel rotating unit (24) is provided for driving the at least one wheel (20).

40. A device in accordance with Claim 39, wherein a plurality of wheel rotating units (24) are provided and wherein each of the wheel rotating units (24) comprises a balance placement area (22).

41. A device in accordance with Claim 39, wherein there is provided a wheel rotating unit (24) which comprises a drive belt having a length that corresponds at least to one wheel base of the vehicle (10) and having a width that corresponds at least to one width of the vehicle (10), and wherein a balance placement area (22) for each of the wheels (20) is arranged under the drive belt.

42. A device in accordance with any of the Claims 38 to 41, wherein at least one locking device (46) is provided for immovably fixing a wheel suspension (42) of the at least one wheel (20) relative to the bodywork (44) of the vehicle (10).

**43.** A device in accordance with any of the Claims 38 to 42, wherein the wind tunnel balance is tareable (16).

**44.** A device in accordance with any of the Claims 38 to 43, wherein, under the vehicle (10), there is a movable base which is formed by a circulating belt.

**45.** A device in accordance with any of the Claims 38 to 44, wherein the vehicle is attachable (10) to a roof (48) or a crossbeam (50) of the wind tunnel (12) by the securing device (52).

**46.** A device in accordance with Claim 45, wherein the securing device comprises at least one carrier (52) which is mountable on the roof (48) or the crossbeam (50) of the wind tunnel (12).

**47.** A device in accordance with Claim 46, wherein the carrier is an aerodynamically shaped strut (52).

**48.** A device in accordance with any of the Claims 45 to 47, wherein the crossbeam (50) is movable in the wind tunnel (12).

**49.** A device in accordance with any of the Claims 38 to 44, wherein the vehicle (10) is attachable to an immovable, fixed base region (14) of the wind tunnel (12) with the aid of the securing device (40).

**50.** A device in accordance with Claim 49, wherein the securing device comprises supporting elements (40) and wherein the supporting elements (40) are placeable on an underbody region (34) of the vehicle (10) and attachable to an immovable, fixed base region (14) of the wind tunnel (12).

**51.** A device in accordance with Claim 50, wherein the supporting elements are (40) placeable on jacking points (32) of the underbody region (34) of the vehicle (10).

**52.** A device in accordance with any of the Claims 38 to 51, wherein the vehicle (10) is fixable on the wind tunnel balance (16) during the measurement of the measured value $F_{vert,ges}$ of the vertical force in such a way that a weight force $F_G$ of the vehicle (10) acts directly on the wind tunnel balance (16).

**53.** A device in accordance with any of the Claims 38 to 52, wherein the wind tunnel balance (16) comprises four wheel rotating units (24).

**54.** A device in accordance with any of the Claims 38 to 53, wherein there is provided a data-processing system for reading and processing the measured values detected by the wind tunnel balance (16) for automatically determining the correction value $F_{vert,korr}$ and the vertical force $F_{vert}$.

**Revendications**

**1.** Procédé pour déterminer une valeur de correction $F_{vert,korr}$, en vue de corriger une valeur de mesure de force verticale $F_{vert,ges}$ mesurée par une balance de soufflerie, d'une force verticale $F_{vert}$ agissant globalement sur un véhicule comportant au moins une roue, dans un tunnel de soufflerie, lorsque ce véhicule est soumis à un écoulement d'air, procédé
d'après lequel la valeur de correction $F_{vert,korr}$ correspond à une force verticale, qui agit, en présence de l'écoulement d'air, sur une zone de surface d'appui non recouverte par ladite au moins une roue, d'une surface d'appui de balance de la balance de soufflerie,
d'après lequel on mesure une première valeur de référence $F_{vert,ref1}$ et une deuxième valeur de référence $F_{vert,wind,ref2}$,
d'après lequel, pendant la mesure de la première valeur de référence $F_{vert,ref1}$ et de la deuxième valeur de référence $F_{vert,wind,ref2}$, on fixe le véhicule au tunnel de soufflerie avec un dispositif de fixation,
d'après lequel on mesure la première valeur de référence $F_{vert,ref1}$ sans que le véhicule soit soumis à un écoulement d'air,
d'après lequel on mesure la deuxième valeur de référence $F_{vert,wind,ref2}$ en soumettant le véhicule à l'écoulement d'air, et
d'après lequel on détermine la valeur de correction $F_{vert,korr}$ en formant la différence entre la deuxième valeur de référence $F_{vert,wind,ref2}$ et la première valeur de référence $F_{vert,ref1}$.

**2.** Procédé selon la revendication 1, d'après lequel pendant la mesure de la première valeur de référence $F_{vert,ref1}$ et de la deuxième valeur de référence $F_{vert,wind,ref2}$, une suspension de roue de ladite au moins une roue est immobilisée par rapport à la carrosserie du véhicule.

3. Procédé selon la revendication 2, d'après lequel on utilise au moins un dispositif de blocage pour l'immobilisation de la suspension de roue de ladite au moins une roue par rapport à la carrosserie du véhicule.

4. Procédé selon la revendication 3, d'après lequel on utilise en tant que véhicule, un véhicule automobile.

5. Procédé selon l'une des revendications précédentes, d'après lequel pendant la mesure de la première valeur de référence $F_{vert,ref1}$ et de la deuxième valeur de référence $F_{vert,wind,ref2}$, le véhicule est fixé au tunnel de soufflerie à l'aide du dispositif de fixation, de manière telle qu'au moins une fraction d'un poids $F_G$ du véhicule agisse sur la surface d'appui de balance.

6. Procédé selon la revendication 5, d'après lequel au moins 75% du poids $F_G$ du véhicule agissent sur la surface d'appui de balance.

7. Procédé selon l'une des revendications précédentes, d'après lequel on entraîne ladite au moins une roue pendant la mesure de la première valeur de référence $F_{vert,ref1}$ et de la deuxième valeur de référence $F_{vert,wind,ref2}$.

8. Procédé selon la revendication 7, d'après lequel on utilise au moins une unité de rotation de roue pour entraîner ladite au moins une roue.

9. Procédé selon la revendication 8, d'après lequel on utilise pour toutes les roues du véhicule, une unité de rotation de roue commune.

10. Procédé selon la revendication 9, d'après lequel on utilise une unité de rotation de roue comprenant une bande d'entraînement, qui présente une longueur susceptible d'être soumise à l'écoulement d'air correspondant au moins à un empattement du véhicule, et qui présente une largeur susceptible d'être soumise à l'écoulement d'air correspondant au moins à une largeur du véhicule,
d'après lequel la surface d'appui de balance est formée par la surface de bande susceptible d'être soumise à l'écoulement d'air et définie par la longueur et la largeur de la bande d'entraînement, et
d'après lequel, pour chacune des roues, une surface d'appui reliée à la balance de soufflerie, est agencée sous la bande d'entraînement.

11. Procédé selon la revendication 8, d'après lequel le véhicule présente plus d'une roue, et
d'après lequel il est prévu pour chacune des roues, une unité de rotation de roue propre à chaque roue et comprenant une bande d'entraînement et une surface d'appui de balance.

12. Procédé selon l'une des revendications précédentes, d'après lequel on entraîne ladite au moins une roue pendant la mesure de la valeur de mesure de force verticale $F_{vert,ges}$.

13. Procédé selon l'une des revendications précédentes, d'après lequel on entraîne ladite au moins une roue pendant la mesure d'une valeur de mesure de force verticale globale $F_{vert,brutto}$ de toutes les forces verticales agissant sur la balance de soufflerie.

14. Procédé selon l'une des revendications précédentes, d'après lequel au cours de toutes les mesures, on déplace le sol sous le véhicule, et
d'après lequel le sol déplacé est formé par une bande en révolution.

15. Procédé selon la revendication 14, d'après lequel le véhicule présente au moins deux roues agencées côte à côte, et d'après lequel on ne déplace que le sol entre lesdites au moins deux roues agencées côte à côte.

16. Procédé selon l'une des revendications précédentes, d'après lequel on mesure tout d'abord la deuxième valeur de référence $F_{vert,wind,ref2}$.

17. Procédé selon la revendication 16, d'après lequel on fait la tare de la balance de soufflerie après avoir mesuré la deuxième valeur de référence $F_{vert,wind,ref2}$, et on mesure ensuite la première valeur de référence $F_{vert,ref1}$.

**18.** Procédé selon l'une des revendications précédentes, d'après lequel on mesure tout d'abord la première valeur de référence $F_{vert,ref1}$.

**19.** Procédé selon la revendication 18, d'après lequel on fait la tare de la balance de soufflerie après avoir mesuré la première valeur de référence $F_{vert,ref1}$, et on mesure ensuite la deuxième valeur de référence $F_{vert,wind,ref2}$.

**20.** Procédé selon la revendication 19, d'après lequel, après la mesure de la deuxième valeur de référence $F_{vert,wind,ref2}$, on mesure une troisième valeur de référence $F_{vert,ref3}$ dans les mêmes conditions que la première valeur de référence $F_{vert,ref1}$,
d'après lequel on forme une valeur moyenne $F_{vert,ref1,3,mittel}$ entre la première valeur de référence $F_{vert,ref1}$ et la troisième valeur de référence $F_{vert,ref3}$, et
d'après lequel, pour la détermination de la valeur de correction $F_{vert,korr}$, on remplace la première valeur de référence $F_{vert,ref1}$ par la valeur moyenne $F_{vert,ref1,3,mittel}$.

**21.** Procédé selon l'une des revendications précédentes, d'après lequel il est prévu une différence de rigidité entre le véhicule et la balance de soufflerie, de préférence une différence de rigidité d'au moins 50:1.

**22.** Procédé selon l'une des revendications précédentes, d'après lequel il est prévu, dans le cours de la trajectoire de force de la force verticale agissant sur le véhicule, allant d'une carrosserie ou d'un châssis du véhicule à la balance de soufflerie, une zone de rigidité moindre par rapport à la carrosserie ou au châssis du véhicule.

**23.** Procédé selon la revendication 22, d'après lequel une différence de rigidité entre la carrosserie ou le châssis et la zone de rigidité moindre, prend une valeur d'au moins 50:1.

**24.** Procédé selon l'une des revendications 22 ou 23, d'après lequel on utilise un véhicule réel, et
d'après lequel la zone de rigidité moindre est formée par ladite au moins une roue du véhicule réel.

**25.** Procédé selon l'une des revendications 22 ou 23, d'après lequel on utilise un modèle d'un véhicule avec des roues rigides, et
d'après lequel la zone de rigidité moindre est formée par la bande d'entraînement de l'unité de rotation de roue.

**26.** Procédé selon l'une des revendications 22 ou 23, d'après lequel on utilise un modèle d'un véhicule ou un véhicule avec des roues rigides, et
d'après lequel la zone de rigidité moindre est formée par la surface d'appui de balance ou un élément intermédiaire élastique entre la surface d'appui de balance et la balance de soufflerie.

**27.** Procédé selon l'une des revendications précédentes, d'après lequel on fixe le véhicule à l'aide du dispositif de fixation, à un plafond ou sur une traverse transversale du tunnel de soufflerie.

**28.** Procédé selon la revendication 27, d'après lequel le dispositif de fixation comprend au moins un support monté au plafond ou sur la traverse transversale du tunnel de soufflerie.

**29.** Procédé selon l'une des revendications 27 ou 28, d'après lequel on utilise une traverse transversale mobile.

**30.** Procédé selon la revendication 28 ou la revendication 29, d'après lequel on utilise en guise de support, une lame de forme aérodynamique.

**31.** Procédé selon l'une des revendications 1 à 26, d'après lequel on fixe le véhicule à l'aide du dispositif de fixation, sur une zone de sol, non mobile, fixe, du tunnel de soufflerie.

**32.** Procédé selon la revendication 31, d'après lequel on utilise en guise de dispositif de fixation, des éléments de support d'appui, et
d'après lequel les éléments de support d'appui sont appliqués contre une zone de plancher inférieur du véhicule, et sont fixés sur la zone de sol non mobile, fixe, du tunnel de soufflerie.

**33.** Procédé selon la revendication 32, d'après lequel les éléments de support d'appui sont appliqués contre des emplacements de réception de cric de levage de la zone de plancher inférieur du véhicule.

**34.** Procédé selon l'une des revendications précédentes, d'après lequel, pendant la mesure de la valeur de mesure de force verticale $F_{vert,ges}$, on fixe le véhicule sur la balance de soufflerie de façon telle, qu'un poids $F_G$ du véhicule agisse directement sur la balance de soufflerie.

**35.** Procédé selon l'une des revendications précédentes, d'après lequel on fait la tare de la balance de soufflerie avant de mesurer la valeur de mesure de force verticale $F_{vert,ges}$.

**36.** Procédé selon l'une des revendications précédentes, d'après lequel on détermine la force verticale $F_{vert}$, en formant la différence entre la valeur de mesure de force verticale $F_{vert,ges}$ mesurée et de la valeur de correction $F_{vert,korr}$.

**37.** Procédé selon l'une des revendications précédentes, d'après lequel on mesure à l'aide de la balance de soufflerie, un poids $F_G$ du véhicule, sans le soumettre à l'action de l'air et pendant que ladite au moins une roue est au repos, d'après lequel on mesure une valeur de mesure de force verticale globale $F_{vert,brutto}$ de toutes les forces verticales agissant sur le véhicule dans le tunnel de soufflerie en le soumettant à l'action de l'écoulement d'air, et d'après lequel on détermine la valeur de mesure de force verticale $F_{vert,ges}$ en formant la différence entre la valeur de mesure de force verticale globale $F_{vert,brutto}$ et le poids $F_G$ du véhicule.

**38.** Dispositif pour la mise en oeuvre d'un procédé selon l'une des revendications précédentes, comprenant un tunnel de soufflerie (12), une balance de soufflerie (16) et au moins une surface d'appui de balance (22), qui est reliée à la balance de soufflerie (16) et est prévue pour supporter au moins une roue (20) d'un véhicule (10), **caractérisé par** un dispositif de fixation (40 ; 52) pour fixer le véhicule (10) au tunnel de soufflerie (12).

**39.** Dispositif selon la revendication 38, dans lequel il est prévu au moins une unité de rotation de roue (24) pour entraîner ladite au moins une roue (20).

**40.** Dispositif selon la revendication 39, dans lequel sont prévues plusieurs unités de rotation de roue (24), et dans lequel chacune des unités de rotation de roue (24) comprend une surface d'appui de balance (22).

**41.** Dispositif selon la revendication 39, dans lequel il est prévu une unité de rotation de roue (24) comprenant une bande d'entraînement, qui présente une longueur correspondant au moins à un empattement du véhicule (10), et qui présente une largeur correspondant au moins à une largeur du véhicule (10), et dans lequel, pour chacune des roues (20), une surface d'appui de balance (22) est agencée sous la bande d'entraînement.

**42.** Dispositif selon l'une des revendications 38 à 41, dans lequel il est prévu au moins un dispositif de blocage (46) pour l'immobilisation d'une suspension de roue (42) de ladite au moins une roue (20) par rapport à la carrosserie (44) du véhicule (10).

**43.** Dispositif selon l'une des revendications 38 à 42, dans lequel il est possible de faire la tare de la balance de soufflerie (16).

**44.** Dispositif selon l'une des revendications 38 à 43, dans lequel il est prévu un sol mobile sous le véhicule (10), qui est formé par une bande en révolution.

**45.** Dispositif selon l'une des revendications 38 à 44, dans lequel le véhicule (10) peut être fixé, à l'aide du dispositif de fixation (52), à un plafond (48) ou sur une traverse transversale (50) du tunnel de soufflerie (12).

**46.** Dispositif selon la revendication 45, dans lequel le dispositif de fixation comprend au moins un support (52) pouvant être monté au plafond (48) ou sur la traverse transversale (50) du tunnel de soufflerie (12).

**47.** Dispositif selon la revendication 46, dans lequel le support est une lame (52) de forme aérodynamique.

**48.** Dispositif selon l'une des revendications 45 à 47, dans lequel la traverse transversale (50) peut être déplacée dans le tunnel de soufflerie (12).

**49.** Dispositif selon l'une des revendications 38 à 44, dans lequel le véhicule (10) peut être fixé à l'aide du dispositif de fixation (40), sur une zone de sol (14), non mobile, fixe, du tunnel de soufflerie (12).

**50.** Dispositif selon la revendication 49, dans lequel le dispositif de fixation comprend des éléments de support d' appui (40), et
dans lequel les éléments de support d'appui (40) peuvent être appliqués contre une zone de plancher inférieur (34) du véhicule (10), et peuvent être fixés sur la zone de sol (14) non mobile, fixe, du tunnel de soufflerie (12).

**51.** Dispositif selon la revendication 50, dans lequel les éléments de support d'appui (40) peuvent être appliqués contre des emplacements de réception de cric de levage (32) de la zone de plancher inférieur (34) du véhicule (10).

**52.** Dispositif selon l'une des revendications 38 à 51, dans lequel pendant la mesure de la valeur de mesure de force verticale $F_{vert,ges}$, le véhicule (10) peut être fixé sur la balance de soufflerie (16) de façon telle, qu'un poids $F_G$ du véhicule (10) agisse directement sur la balance de soufflerie (16).

**53.** Dispositif selon l'une des revendications 38 à 52, dans lequel la balance de soufflerie (16) comprend quatre unités de rotation de roue (24).

**54.** Dispositif selon l'une des revendications 38 à 53, dans lequel il est prévu une unité de traitement de données pour collecter et traiter les valeurs de mesure déterminées à l'aide de la balance de soufflerie (16), en vue de la détermination automatique de la valeur de correction $F_{vert,korr}$ et de la force verticale $F_{vert}$.

FIG.1

FIG.2

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4843873 A
- DE 19527742 A1
- DE 19702421 A1
- EP 0168527 A2
- DE 8803252 U1
- DE 3715460 C1